# DEMANDE DE BREVET EUROPEEN

(11) **EP 1 162 181 A1**
(43) Date de publication de la demande: **12.12.2001**
(21) Numéro de dépôt: 01401284.3
(22) Date de dépôt: 17.05.2001
(51) Int. Cl.: C03C 17/23, C03C 25/10, C03B 37/012, C03B 37/014, C03B 37/016

(54) **Préformes et fibres optiques revêtues d'alumine avec ou sans silice**

(30) Priorité: 05.06.2000 FR 0007143
(71) Demandeur: ALCATEL, 75008 Paris (FR)
(72) Inventeur: Orcel, Gérard, 78600 Maisons Laffitte (FR); Dubois, Sophie, 78100 Saint Germain en Laye (FR); Campion, Jean-Florent, 78700 Conflans Ste Honorine (FR)
(74) Mandataire: Laroche, Danièle

(57) **Abrégé**

L'invention concerne une préforme pour fibre optique (3) comprenant un coeur optique (20), une gaine optique (21) et une gaine externe (28), dans laquelle la gaine externe comprend une zone périphérique (25) comprenant de 20 à 100% en poids d'alumine et de 80 à 0% en poids de silice. Une telle préforme permet l'obtention des fibres optiques présentant des propriétés mécaniques améliorées et imperméables à l'hydrogène.

## Description

L'invention se rapporte à une préforme pour fibre optique comportant un revêtement à base de silice (SiO₂) et/ou d'alumine (Al₂O₃). Les fibres optiques sont obtenues par fibrage à partir de préformes de fibres optiques. Une telle préforme pour fibre optiqùe à base de silice comprend un coeur et une gaine, la gaine comprenant une partie interne en contact direct avec le coeur, appelée gaine optique, et une partie externe, appelée gaine externe.

Les préformes peuvent être obtenus par des procédés tels que le MCVD (acronyme anglais pour « modified chemical vapor deposition ») ou le VAD (acronyme anglais pour « axial vapor deposition »). Dans le cas d'une fabrication par MCVD, le coeur et la gaine optique sont déposés à l'intérieur d'un tube en silice. La préforme appelée primaire est ensuite obtenue par rétreint. Ensuite, la gaine externe est déposée par l'extérieur sur la préforme primaire.

Les conducteurs optiques sont couramment utilisés dans le domaine des télécommunications. Les informations lumineuses sont généralement transmises à une longueur d'onde d'environ 1300 à 1625 nanomètres par des fibres optiques à base de silice. Une telle fibre optique est formée d'une partie optiquement active formée d'un coeur, transportant la majeure partie de l'onde lumineuse, et d'une gaine optique, le coeur et la gaine optique étant d'indices de réfraction différents, et le plus souvent d'une partie périphérique externe, appelée gaine externe non optiquement active. Dans le cas d'une préforme obtenue par MCVD, la gaine optique et la gaine externe sont séparées par un tube de silice, qui peut être optiquement actif.

Comme le fibrage d'une préforme en une fibre optique a lieu de façon homothétique, on utilise les mêmes termes de coeur, gaine optique et gaine externe pour la préforme à partir de laquelle est fabriquée la fibre optique. Chaque fibre est protégée par des revêtements en matériau polymère et les revêtements de protection sont le plus souvent recouverts d'un autre revêtement en polymère pigmenté.

La fragilité mécanique des fibres optiques pose des problèmes lors de leur mise en oeuvre.

Par ailleurs, on sait que les fibres optiques ne doivent pas être exposées à l'hydrogène car ce gaz altère leurs propriétés de transmission. L'altération est d'autant plus importante qu'est élevée la pression partielle d'hydrogène à laquelle est soumise la fibre.

Il est possible par exemple d'introduire une barrière à l'hydrogène en déposant la gaine externe en présence de fluor. Cependant, l'utilisation de gaz fluorés entraîne des contraintes non négligeables tant au niveau du respect des paramètres de procédé qu'au niveau des exigences de dépollution.

On connaît de GB 2,145,840 des fibres optiques en silice dont une partie extérieure de la gaine est modifiée par addition d'un oxyde susceptible d'être vitrifié, de préférence de l'oxyde de bore, et/ou au moins un autre oxyde, parmi lesquels l'oxyde d'aluminium. L'addition d'oxyde de bore et d'autres oxydes dans des proportions appropriées, laquelle est de préférence de 1 à 20 % en poids par rapport à la composition de la gaine externe, est préconisée pour éviter d'introduire un guidage de la lumière non désiré. Il n'est pas précisé de procédé de réalisation de la préforme ni la structure d'une telle préforme. Toutefois, un revêtement d'une épaisseur telle que décrite dans ce document (17,5µm) peut occasionner des baisses de performance, notamment en test de traction.

Le document JP 61010037 décrit des préformes comprenant un coeur, une gaine interne de silice dopée et une gaine externe composée de silice et d'un élément d'une liste parmi lesquels l'aluminium. La couche est formée par décomposition des dérivés chlorés. Ensuite, la préforme est vitrifiée. Cependant, le dépôt issu de décomposition thermique dégrade la résistance mécanique de la fibre.

On connaît par US 4,540,601 un procédé pour enduire des fibres obtenues par fibrage à partir d'une préforme. Les fibres sont ensuite exposées à des dérivés d'aluminium décomposés par pyrolyse en alumine amorphe. Ce procédé présente comme inconvénient, outre que la décomposition thermique conduit à une dégradation des propriétés mécaniques de la fibre, un encombrement important de la tour de fibrage. En outre, l'épaisseur de la gaine externe ne peut pas être contrôlée avec précision.

Il existe donc un besoin de fournir des fibres optiques ayant une résistance mécanique améliorée tout en étant suffisamment imperméables à l'hydrogène. En outre, il est intéressant que celles-ci puissent être fabriquées à faible coût.

Par ailleurs, il est intéressant que le procédé de dépôt d'un revêtement soit compatible avec l'équipement existant, notamment qu'il ne nécessite pas de modification de la tour de fibrage.

Il a été trouvé qu'un revêtement de la préforme avec une composition de 20 à 100 % d'alumine et de 80 à 0 % de silice confère aux fibres une plus grande résistance mécanique. En effet, par rapport à un dépôt sur la fibre, le revêtement a une rugosité plus faible car il est fondu lors du fibrage et de plus peut former une couche de compression.

L'invention permet donc d'augmenter la résistance mécanique de la fibre tout en conservant une bonne imperméabilité à l'hydrogène.

L'épaisseur de la couche peut être contrôlée avec une grande précision. En outre, la solution proposée est compatible avec des vitesses de fibrage de plusieurs centaines de mètres par minute.

L'invention concerne donc une préforme pour fibre optique comprenant un coeur optique, une gaine optique et une gaine externe, laquelle gaine externe comprend une zone périphérique comprenant de 20 à 100 % en poids d'alumine et de 80 à 0 % en poids de silice. La gaine externe comprend une partie interne en contact direct avec la gaine optique ou avec le tube en silice, selon le mode de fabrication, et une partie externe en contact direct avec la zone interne, appelée zone périphérique.

Selon un mode de réalisation, la zone périphérique comprend de 50 à 100 % en poids d'alumine et de 50 à 0 % en poids de silice.

Selon un mode de réalisation, la zone périphérique est en alumine. Selon un autre mode de réalisation, la zone périphérique comprend une composition de 50% en poids d'alumine et de 50% en poids de silice.

Selon un mode de réalisation, ladite zone périphérique comprend une couche unique. Selon un autre mode de réalisation, elle comprend plusieurs couches.

Selon encore un autre mode de réalisation, la zone périphérique se trouve en périphérie de la gaine externe.

Selon un mode de réalisation, la zone périphérique est séparée de la gaine optique par un tube en silice.

La préforme selon l'invention présente alors une gaine externe comprenant la zone périphérique en silice et/ou alumine de composition indiquée qui, transformée de façon pratiquement homothétique par le fibrage, donnera une grande résistance mécanique à la fibre optique tout en conservant une imperméabilité à l'hydrogène correcte. Cette gaine externe est généralement de rugosité relativement faible car une telle zone est fondue lors du fibrage.

D'autre part, selon un mode de réalisation, l'épaisseur modérée de la gaine externe précurseur d'une gaine externe de la fibre optique fabriquée à partir de ladite préforme permet d'obtenir une zone de compression. Une zone de compression se définit comme présentant une contrainte longitudinale ayant pour effet de comprimer la zone. Or la mécanique de rupture des verres montre que le principal mécanisme de rupture réside dans la création et la propagation de fissures superficielles. La mise en compression de la surface de la fibre a donc pour conséquence d'éviter un tel phénomène de propagation. Ainsi, la formation d'une telle zone améliore grandement les propriétés mécaniques de ladite fibre optique.

Selon un second mode de réalisation, l'épaisseur de la gaine externe précurseur d'une gaine externe de la fibre optique fabriquée à partir de ladite préforme est si faible qu'il n'est pas possible de créer une zone de compression efficace pour la résistance mécanique. Cependant, à notre grande surprise, la résistance mécanique d'une telle fibre est améliorée de manière significative.

L'invention concerne en outre un procédé de fabrication de la préforme selon l'invention, comprenant les étapes de fabrication d'une préforme primaire comprenant un coeur optique et une gaine optique, et de formation par dépôt externe d'une gaine externe avec une zone périphérique comprenant de 20 à 100 % en poids d'alumine et de 80 à 0 % de silice.

Selon un mode de réalisation du procédé selon l'invention, le dépôt externe est réalisé par recharge plasma. La fabrication de la préforme par une technique de dépôt externe, latéral, telle que la technique de recharge plasma est connue, et décrite par exemple dans la demande de brevet EP-A-0450465. Selon un autre mode de réalisation du procédé selon l'invention, le dépôt externe est réalisé par OVD (acronyme anglais pour « Outside Vapour Deposit »). Le dépôt externe peut aussi être réalisé par procédé sol-gel, imprégnation, dépôt à la vapeur ou évaporation.

La préforme selon l'invention est telle qu'avantageusement la fabrication de fibre optique à partir de ladite préforme est compatible avec des vitesses de fibrage le plus souvent utilisées en fabrication de fibre optique sur une tour de fibrage, lesquelles vitesses sont généralement de l'ordre de plusieurs centaines de mètres par minute. De plus, un tel dépôt permet de préserver l'installation de la tour de fibrage existante, puisque c'est sur la préforme qu'on agit. D'autre part un tel dépôt est compatible avec les conditions de fibrage industriel, et notamment la tolérance sur le diamètre de la fibre optique pour la régulation du procédé de fibrage.

L'invention concerne enfin la fibre optique fabriquée par fibrage d'une préforme selon l'invention.

Selon un mode de réalisation, la au moins une couche de la gaine externe de la fibre ainsi obtenue a une épaisseur sur fibre comprise entre 1 nm et 1 µm.

L'invention sera mieux comprise et d'autres caractéristiques et avantages apparaîtront à la lecture de la description qui va suivre, donnée à titre non limitatif, par référence aux figures 1 à 3.

La figure 1 représente une vue en coupe schématique d'une préforme pour fibre optique selon un mode de réalisation de l'invention.

La figure 2 représente de façon très schématique un dispositif de recharge plasma dans lequel est mis en oeuvre le procédé de fabrication de la préforme selon un mode de réalisation de l'invention.

La figure 3 représente une vue en coupe schématique d'une fibre optique obtenue à partir de la préforme selon un mode de réalisation de l'invention.

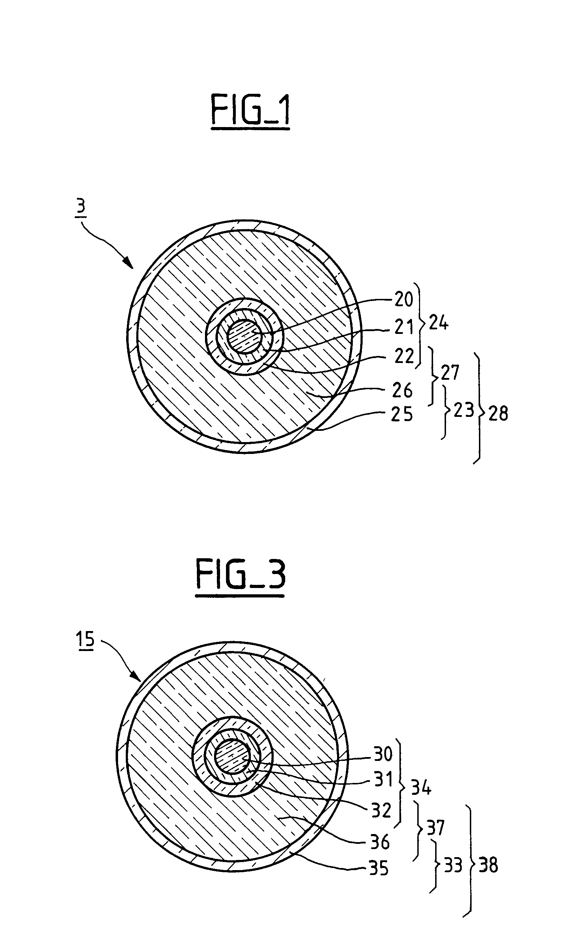

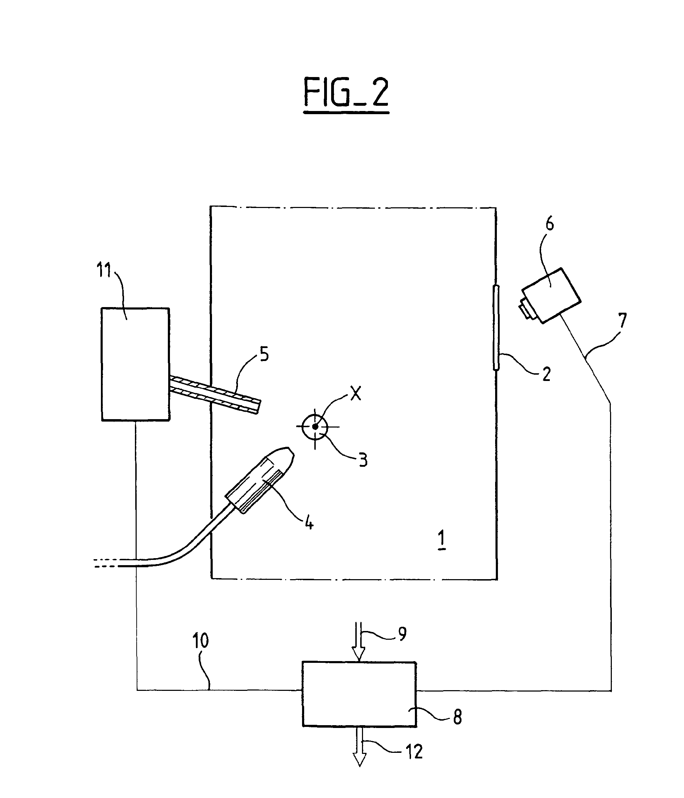

Une préforme primaire 24, représentée sur la figure 1, est réalisée par exemple selon le procédé MCVD par dépôt interne de couches à case de silice éventuellement dopée formant un coeur optique 20 et une gaine optique 21 dans un tube 22, suivi d'une transformation, par rétreint, du tube ainsi intérieurement revêtu en un barreau qui constitue la préforme primaire 24 puis une préforme (finale) 3 est réalisée par dépôt externe à base de silice et/ou d'alumine de couches de dépôt externe de la zone de recharge 23 sur la préforme primaire 24. On utilise de préférence un tube 22 de silice ultra pure. Un tel dépôt externe est explicité à la figure 2 dans le cas d'une recharge plasma.

La figure 2 représente de façon schématique un dispositif de recharge plasma, comprenant une enceinte 1, pourvue d'une fenêtre transparente 2, une préforme 3 vue de coté, l'axe longitudinal X vers laquelle sont dirigées la torche à plasma 4 et la buse 5 d'alimentation en grains de recharge. On peut utiliser de la silice naturelle ou de la silice obtenue par synthèse à partir des dérivés halogénés, par exemple. Concernant l'alumine, on peut utiliser des particules d'alumine de qualité ultra pure dont la taille maximale est typiquement de quelques dizaines de micromètres. De préférence, on utilise des particules d'alumine pyrogénée dont la taille est inférieure à 0,1 µm pour favoriser une distribution homogène des particules dans la zone périphérique. L'utilisation de grains contenant la composition d'alumine et de silice souhaitée est également possible.

A l'extérieur de l'enceinte 1, une caméra CCD 6, disposée derrière la fenêtre 2, est pointée sur la préforme 3. Elle fournit une mesure du diamètre de la préforme, à l'endroit où elle est pointée, sous forme d'une valeur transmise par une liaison 7 à un dispositif 8 de commande du processus de recharge. Le dispositif 8 reçoit, par une liaison multiple 9, d'autres indications sur les conditions du processus de recharge. Sous l'effet d'un programme interne de conduite du processus de recharge, le dispositif 8 fournit, à débit de grains constant, sur une liaison de sortie 10 alimentant un dispositif de commande 11, une valeur de commande du positionnement de la buse 5 par rapport à la préforme 3, qui positionne en conséquence la buse 5 par déplacement de ladite buse 5 le long d'un axe parallèle à l'axe X. Le dispositif 8 fournit aussi, sur une liaison multiple de sortie 12, d'autres valeurs de commande déterminant d'autres aspects du processus de commande.

Une telle préforme peut être fabriquée par exemple par le procédé de recharge plasma explicité sur la figure 2. On dépose d'abord des particules de silice par la buse 5, formant une partie 26 de la zone de recharge 32, qui est de préférence de composition pratiquement identique à celle du tube 22, i.e. en silice extra-pure. La formation d'une zone périphérique 25, représentée sur la figure 1, commence lorsque la silice et/ou l'alumine est déposée sous forme de grains sur la préforme primaire 24. En présence de plasma, les grains sont simplement déposées par gravité à partir d'une conduite d'alimentation qui est une buse 5 et qui est déplacé en translation parallèlement à la préforme primaire 24. Les grains d'alumine et/ou de silice sont fusionnés puis vitrifiés sous une température de l'ordre de 2300° C par le plasma. L'opération de recharge s'effectue dans une cabine close pour assurer une protection contre les perturbations électromagnétiques et contre le dégagement d'ozone émis par la torche de plasma 4.

L'ensemble de la partie 26 et du tube 22 forme une zone interne 27 d'une gaine externe 28. Puis on dépose des particules d'alumine mélangées aux grains de silice ou le cas échéant que les particules d'alumine, dans la buse 5,dans une zone périphérique 25 de la recharge 23, comprenant les toutes dernières couches de dépôt externe de la zone de recharge 23. Il est aussi possible d'envoyer la silice par un premier conduit d'alimentation et les particules d'alumine par un second conduit d'alimentation, lesquels conduits débouchent à proximité de la torche à plasma 4 sensiblement près de la buse 5 d'alimentation en silice. Comme indiqué précédemment, l'introduction d'alumine dans la zone périphérique 25 de la zone de recharge 23 permet la fabrication industrielle lors de l'étirage à chaud d'une fibre optique 15 possédant une résistance à l'hydrogène et une résistance mécanique améliorée par rapport à des fibres sans ce revêtement. La recharge plasma opère par passes, de droite à gauche, puis de gauche à droite, au cours desquelles la torche à plasma 4 et la buse 5 balaient en longueur la préforme 3.

On aboutit ainsi à une préforme rechargée 3 selon l'invention, comprenant une zone de recharge 23 comportant une partie 26 et une zone périphérique 25. La gaine externe 28 de ladite préforme 3 est formée du tube 22, et de la zone de recharge 23 comprenant la partie 26 de la zone périphérique 25. Selon un mode de réalisation de l'invention, il est possible de doper, avec une proportion d'alumine inférieur à celle de la zone 25, la partie 26 de la zone de recharge 23. Les particules d'alumine sont introduites dans une proportion relative par rapport aux grains de silice qui est fonction de la pureté en silice des grains et du tube 22 de la préforme primaire 24.

Cependant, la préforme rechargée 3 selon l'invention peut également être obtenue par dépôt en utilisant le procédé sol-gel. Le dépôt d'alumine et/ou silice peut être réalisé par exemple selon le procédé décrit par B.E. Yoldas, Ceramic Bulletin 54-3, 286 (1975). Le précurseur de l'alumine est un sol clair obtenu à partir d'alkoxides d'aluminium Al(OR)₃. Le procédé comporte quatre étapes : l'hydrolyse des alkoxides d'aluminium, la peptisation des hydroxides en sol, la formation du gel et la pyrolyse du gel en alumine. Un autre procédé sol-gel passe par la synthèse de xérogels (L.Laby et L.C. Klein, A.Turniansky et D.Avnir, Journal of Sol-Gel Science and Technology, **10**, 177-184 (1997)).

Tous les éléments illustrés par la figure 2 sont bien connus de l'homme du métier. Ainsi, les moyens de support de la préforme 3, avec entraînement en rotation et en translation, un chariot de support de la torche à plasma 4 et de la buse 5, avec un entraînement en translation, parallèlement à l'axe X, des moyens d'évaluation de la position angulaire de la préforme 3 et de la position longitudinale du chariot sont par exemple décrits dans la demande de brevet européen EP-A1-0.440.130. Tous ces moyens permettent de façon connue d'éloigner la préforme 3 de la torche 4 au fur et à mesure du grossissement de la préforme 3. Des moyens permettant de pointer la caméra 6 en des endroits successifs de la préforme 3 dans une passe de mesure, qui pourraient prendre la forme d'un second chariot au déplacement couplé avec celui du premier chariot, appartiennent également à la technique connue.

En outre, le dispositif peut comporter d'autres éléments utilisés habituellement.

La fibre optique 15 est fabriquée par étirage à chaud, à partir de la préforme primaire rechargée 3 selon l'invention, sous une tension de fibrage entre 10 et 250g, de préférence entre 30 et 150g. La figure 3 représente une vue en coupe schématique d'une fibre optique 15 obtenue à partir de la préforme 3, de façon pratiquement homothétique.

On y distingue un coeur optique 30 et une gaine optique 31, formant la partie généralement optiquement active à base de silice. La zone 32 correspond au tube 22 de la préforme 3. La zone interne 37 de la gaine externe 38 est formée par la zone 32 et une partie 36. La zone de recharge 33 correspond à la zone de recharge 23 de la préforme et comprend la partie 36 et la zone périphérique 35.

Les exemples qui suivent illustrent l'invention, sans pour autant en limiter la portée.

### Exemple 1

Pour la fibre selon l'exemple 1, une préforme est divisée en deux puis une partie est revêtue d'une couche d'alumine par un procédé sol-gel. On prépare un sol d'alumine par hydrolyse de 136.6 g d'aluminium tri-sec.butoxide (Al(OC₄H₉)₃, aussi appelé ASB) dans 1000 ml d'eau désionisée à 80°C en agitant pendant 30 minutes. Le sol est peptisé par addition de 0,035 mole d'acide nitrique en maintenant sous agitation à 80 °C sous reflux pendant 7 jours.

La préforme est nettoyée par trempage dans une solution de surfactant (Decon 90) dilué à l'eau distillé en rapport 60/40 pendant deux heures. Elle est rincée à l'eau distillée puis à l'acétone.

La préforme est revêtue par immersion. Pour cela, la préforme est immergée dans le sol placé dans un récipient puis remontée verticalement hors du sol à vitesse contrôlée de 40cm/min. La préforme est ensuite soumise à un traitement thermique à 80°C pendant 1 heure.

### Exemple 2

La procédure de dépôt selon l'exemple 1 est répété trois fois sur une moitié de préforme en nettoyant chaque fois entre les dépôts successifs. On obtient une préforme revêtue de trois couches d'alumine pure.

### Exemple 3

On prépare un sol de silice /alumine en mélangeant 123 g d'ASB et 123 g de tétraéthylorthosilicate partiellement hydrolysé (TEOS) dans 900 ml d'eau désionisée. Le précipité formé est alors peptisé avec 0,1 mole d'acide nitrique. La solution obtenue est chauffée à 90°C pendant 5 heures sous reflux. Le sol translucide obtenu forme un gel transparent au bout de sept heures à température ambiante.

Une moitié de préforme est nettoyée comme décrit dans l'exemple 1 puis revêtue de deux couches du gel obtenu.

Une fibre est ensuite étirée à chaud à partir des préformes revêtues. Pour chacune des préformes, une fibre de référence non revêtue est fabriquée par étirage à chaud.

Les propriétés mécaniques des fibres revêtues des exemples 1 à 3 ont été étudiées et comparées à celles des fibres de référence. Dans ce but, les fibres selon l'exemple 1, 2 et 3 ont été soumises au test de résistance à la traction normalisé. Celui-ci consiste à étirer une fibre et à mesurer la force nécessaire à la rupture de celle-ci. Ce test est réalisé sur 50 fibres et on obtient une distribution statistique. La médiane de cette distribution est portée dans le tableau 1 ci-dessous pour les trois fibres traitées et les fibres de référence correspondantes. On constate que la résistance à la traction augmente d'environ 5% pour les fibres ayant un revêtement en alumine ou en silice/alumine.

En outre, la pente Weibull a été déterminée pour les fibres obtenues à partir des préformes des exemples 1 à 3.

Par ailleurs, le facteur N dynamique a été évalué pour ces fibres. Les résultats sont également consignés dans le tableau 1 ci-dessous. On note que le facteur N-dynamique augmente pour le revêtement en alumine pure et ce d'autant plus que l'épaisseur est importante(exemple 2).

Les résultats pour les fibres des exemples 1 à 3 sont portés dans le tableau 1.

**Tableau 1**

| Dépôt | Force de traction [N] | Pente Weibull | Facteur Nd |
|---|---|---|---|
| Référence | 60.5 | 7.0 | 22.0 |
| Exemple 1 | 63.4 | 9.3 | 26.3 |
| Référence | 61.0 | 13.6 | 22.5 |
| Exemple 2 | 64.2 | 54.3 | 28.9 |
| Référence | 59.7 | 40.6 | 20.3 |
| Exemple 3 | 63.3 | 33.5 | 20.6 |

D'autre part, des fibres ont été testées en perméabilité à l'hydrogène pendant 400 heures à 70°C sous une atmosphère (1 atm=1,01325 10⁵ Pa). L'atténuation de la fibre revêtue de l'exemple 2 à 1550 nm est de 0,077 dB/km. Par rapport à la fibre de référence, pour laquelle on mesure une atténuation de 0,088 dB/km, cela présente un gain d'environ 12%.

**Tableau 2**

| Dépôt | Incrément d'atténuation après test H₂ [dB/km] | | | | | |
|---|---|---|---|---|---|---|
| | 1240 nm | 1310 nm | 1385 nm | 1410 nm | 1550 nm | 1600 nm |
| Référence | 0.076 | 0.034 | 0.241 | 0.420 | 0.095 | 0.109 |
| Exemple 1 | 0.077 | 0.036 | 0.236 | 0.392 | 0.091 | 0.104 |
| Référence | 0.062 | 0.029 | 0.224 | 0.381 | 0.088 | 0.101 |
| Exemple 2 | 0.060 | 0.026 | 0.198 | 0.336 | 0.077 | 0.090 |
| Référence | 0.030 | 0.019 | 0.229 | 0.411 | 0.089 | 0.106 |
| Exemple 3 | 0.035 | 0.020 | 0.238 | 0.424 | 0.091 | 0.109 |

Bien entendu, le procédé selon l'invention ne se limite pas aux représentations décrites ci-dessus. EN particulier, li est utilisable pour les procédés de recharge plasma, mais aussi pour d'autres procédés tels que l'OVD, les procédés sol-gel, les imprégnations, les dépôts à la vapeur ou les évaporations.

## Revendications

1. Une préforme pour fibre optique comprenant un coeur optique (20), une gaine optique (21) et une gaine externe (27), **caractérisée en ce que** la gaine externe comprend une zone périphérique (25) comprenant de 20 à 100 % en poids d'alumine et de 80 à 0 % en poids de silice.

2. La préforme selon la revendication 1, dans laquelle ladite zone périphérique comprend de 50 à 100 % en poids d'alumine.

3. La préforme selon la revendication 1 ou 2, dans laquelle ladite zone périphérique comprend 100 % en poids d'alumine.

4. La préforme selon la revendication 1 ou 2, dans laquelle ladite zone périphérique comprend 50% en poids d'alumine et 50% en poids de silice.

5. La préforme selon l'une des revendications 1 à 4, dans laquelle ladite zone périphérique comprend une couche unique.

6. La préforme selon l'une des revendications 1 à 4, dans laquelle ladite zone périphérique comprend plusieurs couches.

7. La préforme selon l'une des revendications 1 à 6, dans laquelle ladite zone périphérique est séparée de la gaine optique par un tube (22) en silice.

8. Procédé de fabrication d'une préforme selon l'une des revendications 1 à 7, comprenant les étapes de :
- fabrication d'une préforme primaire (24) comprenant un coeur optique (20) et une gaine optique (21), et
- formation par dépôt externe d'une zone périphérique (25) comprenant au moins une couche comprenant de 20 à 100 % en poids d'alumine et de 80 à 0 % de silice.

9. Procédé selon la revendication 8, dans lequel l'étape de dépôt externe est réalisée par un procédé sol-gel.

10. Procédé selon la revendication 8, dans lequel l'étape de dépôt externe est réalisée par recharge plasma.

11. Procédé selon la revendication 8, dans lequel l'étape de dépôt externe est réalisée par OVD.

12. Fibre optique (15) fabriquée par étirage à chaud d'une préforme (3) selon l'une des revendications 1 à 7 ou d'une préforme obtenue par un procédé selon l'une des revendications 8 à 11.

13. La fibre selon la revendication 12, dans laquelle ladite au moins une couche de la zone périphérique a une épaisseur sur fibre comprise entre 1 nm et 1 µm.
